# EUROPEAN PATENT APPLICATION

(11) **EP 4 657 892 A1**
(43) Date of publication of application: **03.12.2025**
(21) Application number: 25179017.6
(22) Date of filing: 27.05.2025
(51) Int. Cl.: H04R 25/00, H04R 1/10

(54) **EVALUATION OF HEARING INSTRUMENT COMPONENTS**

(30) Priority: 28.05.2024 US 202463652492 P; 20.05.2025 US 202519213783
(71) Applicant: Starkey Laboratories, Inc., Eden Prairie, MN 55344 (US)
(72) Inventor: TRIPTO, Eitamar, Eden Prairie, 55344 (US); REIS JR., Joseph Matthias, Eden Prairie, 55344 (US); BORNSTEIN, Nitzan, Eden Prairie, 55344 (US); FELDSIEN, Craig C., Eden Prairie, 55344 (US)
(74) Representative: Crowell & Moring U.K. LLP

(57) **Abstract**

A method comprises obtaining, by one or more processors, a component model, the component model being a 3-dimensional (3D) model of a component of a hearing instrument; obtaining, by the one or more processors, a plurality of ear impression models, each respective ear impression model of the plurality of ear impression models being a 3D model of an ear canal of a user corresponding to the respective ear impression model; for each respective ear impression model, performing, by the one or more processors, a component optimization process that optimizes a position of the component model within the respective ear impression model in 6-degrees of freedom based on one or more optimization criteria; generating, by the one or more processors, statistical data based on the positions of the components model within the ear impression models; outputting, by the one or more processors, the statistical data.

## Description

This application claims the benefit of U.S. Provisional Patent Application 63/652,492, filed May 28, 2024, the entire content of which is incorporated herein by reference.

### TECHNICAL FIELD

This disclosure relates to hearing instruments.

### BACKGROUND

Hearing instruments are devices designed to be worn on, in, or near one or more of a user's ears. Common types of hearing instruments include hearing assistance devices (e.g., "hearing aids"), earbuds, headphones, hearables, cochlear implants, and so on. In some examples, a hearing instrument may be implanted or integrated into a user. Some hearing instruments include additional features beyond just environmental sound-amplification. For example, some modern hearing instruments include advanced audio processing for improved functionality, controlling and programming the hearing instruments, wireless communication with external devices including other hearing instruments (e.g., for streaming media), and so on.

### SUMMARY

This disclosure describes techniques for evaluating effects of substituting component on hearing instrument size. As described herein, a computing system obtains a component model. The component model includes a 3-dimensional (3D) model of a component of a hearing instrument. The computing system also obtains a plurality of ear impression models. Each respective ear impression model of the plurality of ear impression models being a 3D model of an ear canal of a user corresponding to the respective ear impression model. For each respective ear impression model of the plurality of ear impression models, the computing system performs a component optimization process that optimizes a position of the component model within the respective ear impression model in 6-degrees of freedom based on one or more optimization criteria. The computing system may generate statistical data based on the positions of the components model within the ear impression models. The computing system may output the statistical data.

**In** one example, this disclosure describes a computer-implemented method comprising: obtaining, by one or more processors implemented in circuitry, a component model, the component model being a 3-dimensional (3D) model of a component of a hearing instrument; obtaining, by the one or more processors, a plurality of ear impression models, each respective ear impression model of the plurality of ear impression models being a 3D model of an ear canal of a user corresponding to the respective ear impression model; for each respective ear impression model of the plurality of ear impression models, performing, by the one or more processors, a component optimization process that optimizes a position of the component model within the respective ear impression model in 6-degrees of freedom based on one or more optimization criteria; generating, by the one or more processors, statistical data based on the positions of the components model within the ear impression models; and outputting, by the one or more processors, the statistical data.

**In** another example, this disclosure describes a computing system comprising: one or more storage devices configured to store: a component model, the component model being a 3-dimensional (3D) model of a component of a hearing instrument; and a plurality of ear impression models, each respective ear impression model of the plurality of ear impression models being a 3D model of an ear canal of a user corresponding to the respective ear impression model; and one or more processors communicatively coupled to the one or more storage devices, the one or more processors configured to: for each respective ear impression model of the plurality of ear impression models, perform a component optimization process that optimizes a position of the component model within the respective ear impression model in 6-degrees of freedom based on one or more optimization criteria; generate statistical data based on the positions of the components model within the ear impression models; and output the statistical data.

**In** another example, this disclosure describes one or more non-transitory computer-readable storage media comprising instructions stored thereon that, when executed, cause one or more processors of a computing system to: obtain a component model, the component model being a 3-dimensional (3D) model of a component of a hearing instrument; obtain a plurality of ear impression models, each respective ear impression model of the plurality of ear impression models being a 3D model of an ear canal of a user corresponding to the respective ear impression model; for each respective ear impression model of the plurality of ear impression models, perform a component optimization process that optimizes a position of the component model within the respective ear impression model in 6-degrees of freedom based on one or more optimization criteria; generate statistical data based on the positions of the components model within the ear impression models; and output the statistical data.

The details of one or more aspects of the disclosure are set forth in the accompanying drawings and the description below. Other features, objects, and advantages of the techniques described in this disclosure will be apparent from the description, drawings, and claims.

### BRIEF DESCRIPTION OF DRAWINGS

FIG. 1 is a block diagram illustrating example components of a system that includes a computing system, in accordance with one or more aspects of this disclosure.
FIG. 2 is a conceptual diagram illustrating an example hearing instrument and components of the hearing instrument, in accordance with one or more techniques of this disclosure.
FIG. 3 is a flowchart illustrating an example operation of a computing system in accordance with one or more techniques of this disclosure.
FIG. 4 is a flowchart illustrating an example component optimization process in accordance with one or more techniques of this disclosure.
FIG. 5 is a conceptual diagram illustrating an example hearing instrument model positioned within an ear impression model in accordance with one or more techniques of this disclosure.
FIG. 6 is a conceptual diagram illustrating an example heat map model in accordance with one or more techniques of this disclosure.
FIG. 7 is a conceptual diagram illustrating axes of an ear impression model.
FIG. 8 is a conceptual diagram illustrating an example table generated by the computing system in accordance with one or more techniques of this disclosure.

### DETAILED DESCRIPTION

Custom hearing instruments have shells that are shaped to conform to the ear canals of individual users. The shell of a hearing instrument defines a cavity. Components may be inserted into or cover an opening of the cavity. Example internal components include receivers (e.g., speakers), microphones, processing circuitry, batteries, faceplates, and so on. The shell of a custom hearing instrument is specifically shaped to fit the ear canal of an individual user. The physical arrangement of internal components may or may not be not specific to an individual user. For instance, there may be a single physical arrangement of the internal components or a limited set of physical arrangements of the internal components. The internal components may be inserted individually or as a group into the shell. In other instances, the arrangement of the internal components of a hearing instrument may be specific to an individual ear of an individual user. In other instances, there may be a limited number of predetermined arrangements of the internal components of hearing instruments from which to choose for an individual patient. Depending on the users' prescriptions to account for their hearing loss, the hearing instruments for different users may include different components.

From time-to-time new versions of components are developed. Such components may have different sizes or shapes than previous versions of the components. For example, a new version of a receiver component may have a different shape than a previous version of the receiver component. An evaluation process may be performed to determine what effects the new version of the component would have on average sizes of hearing instruments that include the new version of the component. Users typically prefer smaller, less visible hearing instruments. Accordingly, if hearing instruments that include the new version of the component are often larger than hearing instruments that include the previous version of the component, a decision might be made not to replace the previous version of the component with the new version of the component. Given the variability of shapes of human ear canals, it is not often apparent whether a new version of a component would lead, on average, to larger or smaller hearing instruments than hearing instruments that include a previous version of the component.

This disclosure describes computer-implemented techniques for evaluating the effects of new versions of components on hearing instruments. As described herein, a computing system may obtain a component model, the component model being a 3-dimensional (3D) model of a component of a hearing instrument. Additionally, the computing system may obtain a plurality of ear impression models. Each respective ear impression model of the plurality of ear impression models is a 3D model of an ear canal of a user corresponding to the respective ear impression model. For each respective ear impression model of the plurality of ear impression models, the computing system may perform a component optimization process that optimizes a position of the component model within the respective ear impression model in 6-degrees of freedom based on one or more optimization criteria. The computing system may generate statistical data based on the positions of the components model within the ear impression models and may output the statistical data.

Advantageously, the techniques of this disclosure may exploit existing databases of ear canal models and corresponding hearing instrument models when evaluating the effects of new versions of components on hearing instruments. By starting the component optimization process from such ear canal models and hearing instrument models, the component optimization process may be relatively abbreviated relative to conventional processes that evaluate positions of components from scratch. As a result, computing resources and time may be conserved. Furthermore, because the plurality of ear impression models may include a large number (e.g., hundreds, thousands, etc.) of ear impression models, the process may be able to obtain accurate statistical data.

A manufacturing system may generate custom hearing instruments that have the determined arrangement of components. For example, the manufacturing system may perform an additive manufacturing process to form a customized shell. In this example, the manufacturing system may also form a spine on a faceplate to hold the components in the determined arrangement. The manufacturing system may insert the faceplate with the components into a cavity defined by the shell.

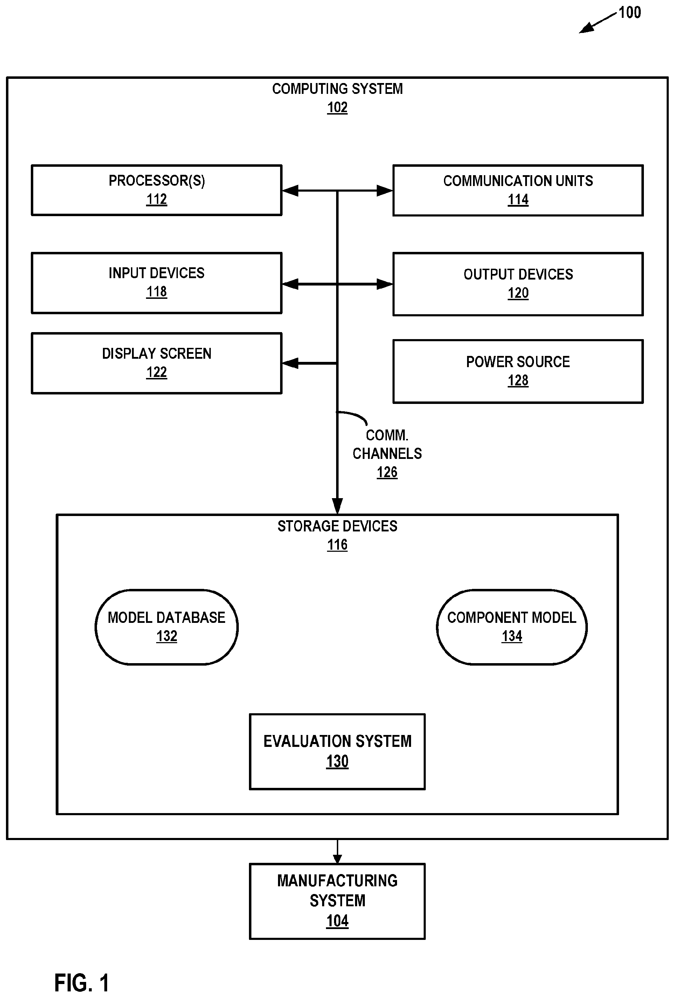

FIG. 1 is a block diagram illustrating example components of a system 100 that includes a computing system 102, in accordance with one or more aspects of this disclosure. In the example of FIG. 1, system 100 also includes a manufacturing system 104. FIG. 1 illustrates only one particular example of computing system 102, and many other example configurations of computing system 102 exist.

Computing system 102 includes one or more computing devices, each of which may include one or more processors. For instance, computing system 102 may include one or more mobile devices (e.g., smartphones, tablet computers, etc.), server devices, personal computer devices, handheld devices, or other types of devices. Actions described in this disclosure as being performed by computing system 102 may be performed by one or more of the computing devices of computing system 102.

As shown in the example of FIG. 1, computing system 102 includes one or more processors 112, one or more communication units 114, one or more storage devices 116, one or more input devices 118, one or more output devices 120, a display screen 122, a power source 128, and one or more communication channels 126. Computing system 102 may include other components. For example, computing system 102 may include physical buttons, microphones, speakers, communication ports, and so on.

Communication channels 126 may interconnect each of processors 112, communication units 114, input devices 118, output devices 120, display screen 122, and storage devices 116 (physically, communicatively, and/or operatively). In some examples, communication channels 126 may include a system bus, a network connection, an interprocess communication data structure, or any other method for communicating data. Power source 128 may provide electrical energy to one or more of processors 112, communication units 114, input devices 118, output devices 120, display screen 122, and storage devices 116.

Storage devices 116 may store information required for use during operation of computing system 102. In some examples, storage devices 116 have the primary purpose of being a short-term and not a long-term computer-readable storage medium. Storage devices 116 may include volatile memory and may therefore not retain stored contents if powered off. In some examples, storage devices 116 includes non-volatile memory that is configured for long-term storage of information and for retaining information after power on/off cycles. In some examples, processors 112 of computing system 102 may read and execute instructions stored by storage devices 116.

Computing system 102 may include one or more input devices 118 that computing system 102 uses to receive user input. Examples of user input include tactile, audio, and video user input. Input devices 118 may include presence-sensitive screens, touchsensitive screens, mice, keyboards, voice responsive systems, microphones, motion sensors capable of detecting gestures, or other types of devices for detecting input from a human or machine.

Communication units 114 may enable computing system 102 to send data to and receive data from one or more other computing devices (e.g., via a communication network, such as a local area network or the Internet). Examples of communication units 114 may include network interface cards, Ethernet cards, optical transceivers, radio frequency transceivers, or other types of devices that are able to send and receive information. Other examples of such communication units may include BLUETOOTH^{™}, 3G, 4G, 5G, and WI-FI^{™} radios, Universal Serial Bus (USB) interfaces, etc.

Output devices 120 may generate output. Examples of output include tactile, audio, and video output. Output devices 120 may include presence-sensitive screens, sound cards, video graphics adapter cards, speakers, liquid crystal displays (LCD), light emitting diode (LED) displays, or other types of devices for generating output. Output devices 120 may include a display screen. In some examples, output devices 120 may include virtual reality, augmented reality, or mixed reality display devices.

Processors 112 may read instructions from storage devices 116 and may execute instructions stored by storage devices 116. Execution of the instructions by processors 112 may configure or cause computing system 102 to provide at least some of the functionality ascribed in this disclosure to computing system 102 or components thereof (e.g., processors 112). As shown in the example of FIG. 1, storage devices 116 include computer-readable instructions associated with an evaluation system 130. Additionally, storage devices 116 may store a model database 132 and a component model 134.

Hearing instruments may include one or more of various types of devices that are configured to provide auditory stimuli to a user and that are designed for wear at, on, near, or in relation to the physiological function of an ear of a user. Hearing instruments may be worn, at least partially, in the ear canal or concha. In any of the examples of this disclosure, each of the hearing instruments may include a hearing assistance device. Hearing assistance devices include devices that help a user hear sounds in the environment of a user. Example types of hearing assistance devices may include hearing aid devices, Personal Sound Amplification Products (PSAPs), bone-anchored or osseointegrated hearing aids, and so on. In some examples, the hearing instruments are over-the-counter, direct-to-consumer, or prescription devices. In some examples, hearing instruments may use a bone conduction pathway to provide auditory stimulation.

Furthermore, in some examples, hearing instruments include devices that provide auditory stimuli to users that correspond to artificial sounds or sounds that are not naturally in the environment of the users, such as recorded music, computer-generated sounds, or other types of sounds. For instance, hearing instruments may include so-called "hearables," earbuds, earphones, or other types of devices that are worn on or near the ears of users. Some types of hearing instruments provide auditory stimuli to users corresponding to sounds from the user's environment and also artificial sounds.

In some examples, a hearing instrument includes a housing or shell that is designed to be worn in the ear for both aesthetic and functional reasons and encloses the electronic components of the hearing instrument. The hearing instrument may be referred to as in-the-ear (ITE), in-the-canal (ITC), completely-in-the-canal (CIC), or invisible-in-the-canal (IIC) devices. An audio tube conducts sound from the receiver into the user's ear canal toward the user's tympanic membrane. In some examples, the hearing instrument is a receiver-in-canal (RIC) hearing-assistance devices, which include housings worn behind the ears that contains electronic components and housings worn in the ear canals that contains receivers.

Hearing instruments may implement a variety of features that help users hear better. For example, hearing instruments may amplify the intensity of incoming sound, amplify the intensity of certain frequencies of the incoming sound, translate or compress frequencies of the incoming sound, receive wireless audio transmissions from hearing assistive listening systems and hearing aid accessories (e.g., remote microphones, media streaming devices, and the like), and/or perform other functions to improve the hearing of a user. In some examples, hearing instruments implement a directional processing mode in which the hearing instruments selectively amplify sound originating from a particular direction (e.g., to the front of the user) while potentially fully or partially canceling sound originating from other directions. In other words, a directional processing mode may selectively attenuate off-axis unwanted sounds. The directional processing mode may help the user understand conversations occurring in crowds or other noisy environments. In some examples, hearing instruments use beamforming or directional processing cues to implement or augment directional processing modes. In some examples, hearing instruments reduce noise by canceling out or attenuating certain frequencies. Furthermore, in some examples, the hearing instruments may help the user enjoy audio media, such as music or sound components of visual media, by outputting sound based on audio data wirelessly transmitted to the hearing instruments.

Hearing instruments include a set of components that are contained within or connected to a shell. The shell defines an internal cavity. The faceplate covers an external opening of the internal cavity. Because different users have differently shaped ear canals, the shape of the shell may be patient specific. The components may include a receiver, one or more microphones, a battery, antennas, wax protectors, user controls, wires, processing circuitry, sensors, faceplates, and so on. A receiver is a component that is designed to generate sound based on electrical signals. In some examples, the components may include a faceplate with a set of attached internal components, such as receivers, microphones, processing circuitry, and so on.

New versions of components are continually being developed. New versions of components may have different performance, efficiency, features, sizes, dimensions, and so on from earlier versions of components. For example, different processing circuitry components or other types of components may have different geometry. When a new version of a component becomes available for evaluation, computing system 102 may obtain a component model 134 for the component. Component model 134 may include a 3-dimensional model of the component. For example, component model 134 may include a 3-dimensional mesh having vertices defining points on the surface of the component. In some examples, component model 134 may include a 3-dimensional voxel image of the component. In some examples, component model 134 may include a point cloud representing the component. The point cloud may include thousands of vertices.

Evaluation system 130 may perform an evaluation process to evaluate effects of including the component in hearing instruments. For example, evaluation system 130 may determine an effect of including the component on the sizes of hearing instruments. In general, users prefer to have smaller hearing instruments so that the hearing instruments are less visible in the users' ears. The size of a hearing instrument may refer to dimensional values (e.g., height, width, length, etc.). The sizes and shapes of components may dictate the sizes of hearing instruments. For example, if a new version of a component is smaller than a previous version of the component, hearing instruments that include the new version of the component may be smaller, thereby allowing the hearing instruments to sit further into users' ear canals, making the hearing instruments less visible. However, if a version of a component is smaller in one dimension but larger in another dimension, the effects on the sizes of hearing instruments may be less apparent. For instance, the new version of the component may allow for smaller hearing instruments for some users but larger hearing instruments for other users.

As noted above, storage devices 116 may store model database 132. Model database 132 includes a plurality of ear impression models. In some examples, model database 132 includes hundreds or thousands of ear impression models. Each respective ear impression model of the plurality of ear impression models may be a 3D model of an ear canal of a user corresponding to the respective ear impression model. In other words, each of the ear impression models may represent the shape of a user's ear canal. An ear impression model may include a 3-dimensional mesh having vertices that define points on the surface of a user's ear canal. In other examples, the ear impression model may represent the user's ear canal in other ways, such as a 3-dimensional voxel image.

In some examples, model database 132 also includes hearing instrument models representing hearing instruments designed for the users. In other words, for each ear impression model of the plurality of ear impression models in model database 132, model database 132 may include a hearing instrument model representing a hearing instrument designed to fit in the ear canal represented by the ear impression model. A hearing instrument model may represent a shape of a shell of a hearing instrument along with component models of one or more components of the hearing instrument and data indicating positions of the one or more components. In some examples, a hearing instrument model includes a 3-dimensional mesh having vertices that define points on surfaces of the shell and components. In some examples, a hearing instrument model includes a 3-dimensional voxel image of the shell and components.

Evaluation system 130 may use the ear impression models in model database 132 and component model 134 to evaluate the effects of the component represented by component model 134. For each respective ear impression model of the plurality of ear impression models, evaluation system 130 may perform a component optimization process that optimizes a position of the component model within the respective ear impression model in 6-degrees of freedom based on one or more optimization criteria. The optimization process does not necessarily use all ear impression models in model database 132. This disclosure uses the term optimal position to refer to a best position that is found using the optimization process and might not be a mathematically optimal position. Moreover, the optimization process itself may or may not be a mathematical optimization process but rather may be a process that attempts to determine a position of the component at the greatest level of insertion of the component into an ear canal, given the ear canal shape, shell shape and thickness, and other components.

As mentioned above, the component optimization process optimizes the position of the component model based on one or more optimization criteria. In different examples, the component optimization process may optimize the position of the component model based on different optimization criteria. Example optimization criteria may include a size of a hearing instrument that includes the component and fits within an ear canal of a user. Thus, the component optimization process may optimize a position of the component model so that the size of the hearing instrument is as small as possible. In some examples, the one or more optimization criteria include distances of the component model from one or more anatomical landmarks of the ear canal of the user corresponding to the respective ear impression model. Example anatomical landmarks may include the patient's tympanic membrane, ear canal aperture, tip of the patient's tragus, and so on.

Furthermore, as part of performing the optimization process, evaluation system 130 may generate statistical data based on the positions of the components model within the ear impression models. For example, for each of the ear impression models, evaluation system 130 may determine a size of the hearing instrument when the component is located at the optimal position. Evaluation system 130 may then determine statistical data based on the sizes of the hearing instruments. For example, evaluation system 130 may determine an average size of the hearing instruments, a statistical distribution of the sizes of the hearing instruments, and so on.

Evaluation system 130 may output the statistical data. For example, evaluation system 130 may output the statistical data for display by display screen 122. In some examples, evaluation system 130 may output the statistical data for transmission to one or more other devices, e.g., via communication units 114.

Manufacturing system 104 may manufacture hearing instruments based on the determined position of the component model. For example, manufacturing system 104 may perform an additive manufacturing process to form a customized shell. In this example, manufacturing system 104 may also form a spine on a faceplate to hold the components in the determined arrangement. Manufacturing system 104 may insert the faceplate with the components into a cavity defined by the shell.

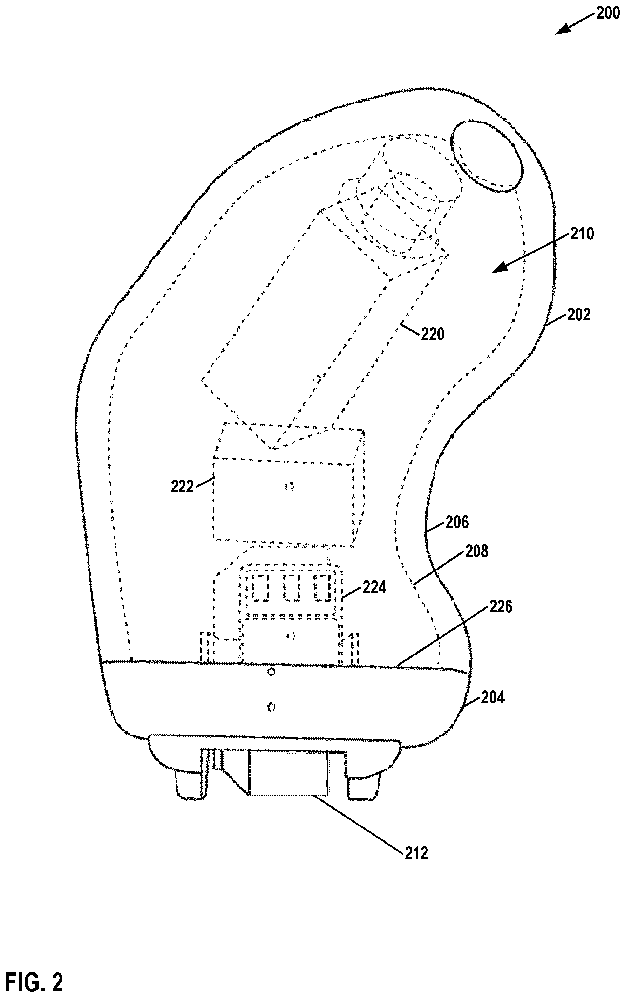

FIG. 2 is a conceptual diagram illustrating an example hearing instrument 200 and components of hearing instrument 200, in accordance with one or more techniques of this disclosure. In the example of FIG. 2, hearing instrument 200 has includes a shell 202 and a faceplate 204. Shell 202 may have a shape that is customized to a specific user. Customizing the shape of shell 202 to a specific user may increase the user's comfort and may increase the placement security of hearing instrument 200 within the user's ear canal. Shell 202 has an outer surface 206 and an inner surface 208. Shell defines an interior cavity 210.

Faceplate 204 covers an external opening of shell 202. When a user wears hearing instrument 200, faceplate 204 is positioned toward an opening of the user's ear canal. Faceplate 204 may include a battery door (not shown) that allows access a battery 212 of hearing instrument 200. Faceplate 204 may also include apertures to allow sound to reach one or more microphones of hearing instrument 200. In some examples, an antenna, user controls (e.g., buttons), a pullcord, or other elements may extend from faceplate 204.

Furthermore, hearing instrument 200 includes a set of components, including receiver 220, processing circuitry 222, and supporting hardware 224. Supporting hardware 224 may include an antenna, sensors, charging contacts, electronics, or other elements. The components of hearing instrument 200 may include additional components, such as one or more microphones, and sensors. A rigid spine (not shown) attached to an inner surface 226 of faceplate 204 may hold one or more of the components at fixed positions relative to faceplate 204. In some examples, the positions of the components are customized to individual users. In some examples, positions of the components are standardized for use in hearing instruments for different groups of users. For instance, there may be three or four different standardized arrangements of the components for different groups of users. In some examples, the positions of the components are based on user preferences.

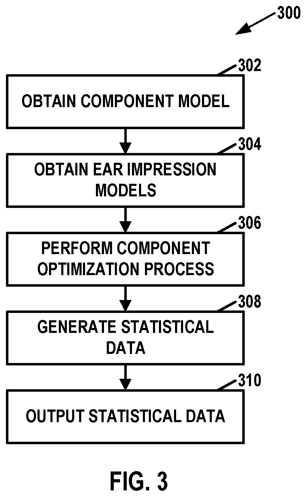

FIG. 3 is a flowchart illustrating an example operation 300 of computing system 102 in accordance with one or more techniques of this disclosure. The operations shown in the flowcharts of this disclosure are provided as examples. In different examples, the operations may include more, fewer, or different actions. For instance, the order of steps 302 and 304 may be exchanged.

In the example of FIG. 3, evaluation system 130 may obtain a component model (302). The component model may include a 3-dimensional (3D) model of a component of a hearing instrument. Evaluation system 130 may obtain the component model from a computer-readable storage medium or another source.

Furthermore, evaluation system 130 may obtain a plurality of ear impression models (304). Each respective ear impression model of the plurality of ear impression models may include a 3D model of an ear canal of a user corresponding to the respective ear impression model. Evaluation system 130 may obtain the ear impression models from model database 132.

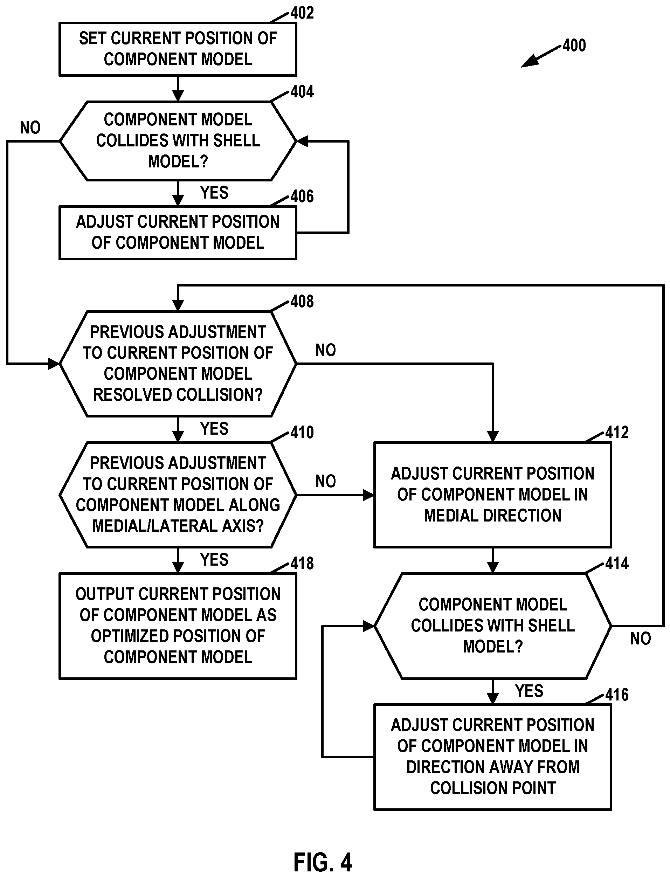

For each respective ear impression model of the plurality of ear impression models, evaluation system 130 performs a component optimization process that optimizes a position of the component model within the respective ear impression model in 6-degrees of freedom based on one or more optimization criteria (306). FIG. 4, which is described in greater detail below, illustrates an example component optimization process. In other examples, evaluation system 130 may perform the component optimization process in other ways. In some examples, the one or more optimization criteria include distances of the component model from one or more anatomical landmarks of the ear canal of the user corresponding to the respective ear impression model.

In some examples, evaluation system 130 may receive an indication of user input that specifies the quantity of ear impression models in the plurality of ear impression models. In some examples, evaluation system 130 receives an indication of user input that specifies a time limit. In such examples, evaluation system 130 may continue performing the component optimization process for different ear impression models until the time limit is reached. In some examples, evaluation system 130 may perform the component optimization process for two or more ear impression models in parallel.

Evaluation system 130 may generate statistical data based on the positions of the components model within the ear impression models (308). For example, after determining an optimized position of the component model within an ear impression model, evaluation system 130 may determine a shape of a hearing instrument that has the component model at the optimized position of the component model. Evaluation system 130 may determine the shape of the hearing instrument so that a shell portion of the hearing instrument conforms to the ear impression model and all components of the hearing instrument are arranged within or on the hearing instrument. Evaluation system 130 may then determine new width, length, and height dimensions of the hearing instrument. Evaluation system 130 may also determine differences in the new dimensions of the hearing instrument as compared to corresponding dimensions of the hearing instrument previously designed for the ear impression model. Evaluation system 130 may then calculate mean values for the each of the new dimensions across multiple ear impression models. Evaluation system 130 may also calculate standard deviation values for the dimensions.

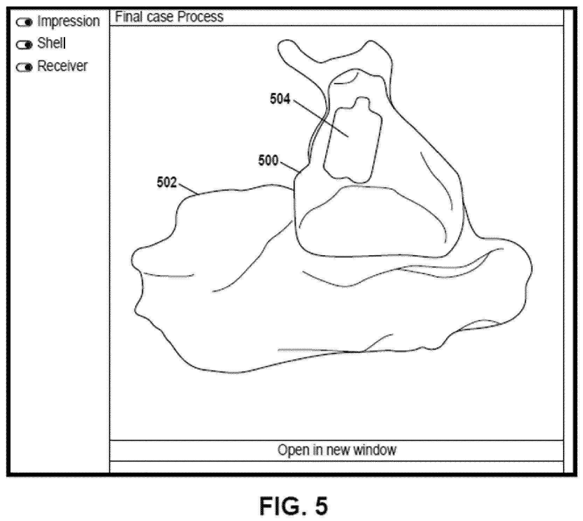

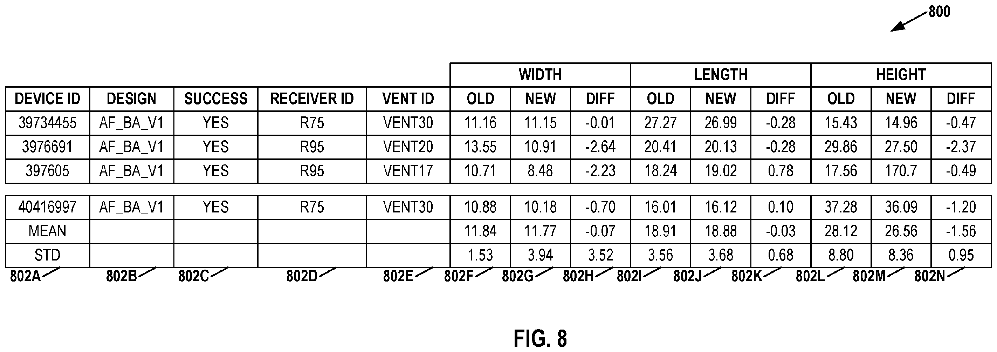

Evaluation system 130 may output the statistical data (310). In some examples, evaluation system 130 may output a table for display. Rows of the table may correspond to different ear impression models. The table may include data indicating statistics regarding the sizes of hearing instruments determined when using the component model. FIG. 8, which is described in greater detail below, is an example of such a table. In some examples, evaluation system 130 may output, for display by a display device (e.g., display screen 122), a graphical user interface that shows the component model at the optimized position relative to the respective ear model, e.g., as shown in FIG. 5 which is discussed below. The graphical user interface may show a shell model 500 and the component model 504 relative to the respective ear model 502.

FIG. 4 is a flowchart illustrating an example component optimization process 400 in accordance with one or more techniques of this disclosure. In the example of FIG. 4, evaluation system 130 optimizes a position of a second component model. The second component model may be a faceplate, a receiver, a sensor, a battery, processing circuitry, or another type of component. The second component model is a 3D model of a second version of a component within an ear impression model. The ear impression model is associated with a hearing instrument model that specifies a position of a first component model within the respective ear impression model. The position of the first component model within the respective ear impression model may be specified by a human designer. The first component model may be a 3D model of a first version of the component.

Evaluation system 130 may set a current position of the second component model based on the position of the first component model (402). For instance, model database 132 may indicate the position of the first component model within the ear canal model. Evaluation system 130 may initially set the current position of the second component model within the same ear canal model based on the position of the first ear canal model. For example, evaluation system 130 may initially set the current position of the second component model so that at least one corner has a position matching a position of a corresponding corner of the first component model. In another example, evaluation system 130 may initially set the current position of the second component model so that a centroid of the second component model is collocated with a centroid of the first component model. In some examples, evaluation system 130 may initially set the current position of the second component model so that a primary axis of the second component model is aligned with a primary axis of the first component model.

In some examples, evaluation system 130 may determine the initial current position of the second component model based on one or more anatomical landmarks of the ear canal model, such as a tympanic membrane or ear canal aperture. For example, evaluation system 130 may determine the initial current position of the second component model as being at a position that is a fixed distance from an outermost surface of an aperture of the ear canal.

In some examples, evaluation system 130 may use a machine learning (ML) model to predict the initial current position of the second component model. Inputs to the ML model may include ear impression data, data indicating a style of a hearing instrument (e.g., ITC, CIC, etc.), a 3D model of the second component, anatomical landmarks and/or other data. In some such examples, the ML model includes a deep neural network, such as a multilayer perceptron. The deep neural network includes an input layer, one or more hidden layers, and an output layer. The layers may be fully connected. Each of the layers includes a set of artificial neurons. Each of the input layer neurons may be associated with a different feature in a feature set. The feature set may include anatomic landmarks, measurements, and/or other data. The output layer may include neurons that output data associated with the initial current position of the second component model. The neurons of each of the layers may be associated with an activation function, such as the rectified linear unit (ReLU) activation function or another activation function. The deep neural network may be trained based on the placement of components and the ear models in model database 132. Use of a deep neural network to predict the initial current position of the second component model may increase the likelihood that the initial current position of the second component being close to a final current position of the second component, which may decrease the amount of time and computing resources that evaluation system 130 expends during the optimization process.

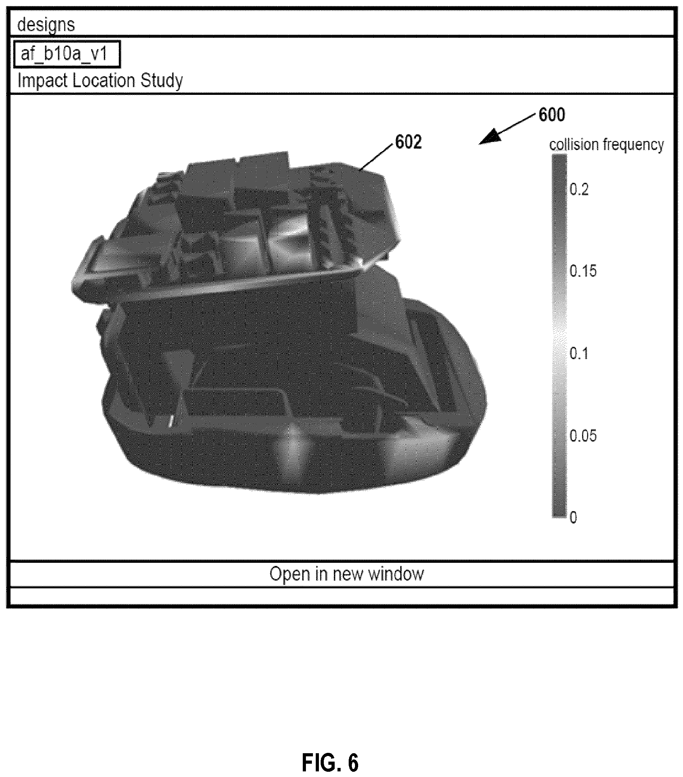

Evaluation system 130 may then determine whether the second component model collides with a shell model when the second component model is at the current position (404). The shell model may have a predefined thickness and may substantially match the shape of the ear canal model. The shell model may be represented as a 3-dimensional mesh. Evaluation system 130 may determine that the second component model collides with the shell model if a line between any two vertices of the second component model passes through a plane defined by vertices of the shell model. Evaluation system 130 may store data indicating the collision points on the second component model for purposes of generating a heat map model. An example heat map model is described below with respect to FIG. 6. In some examples, evaluation system 130 may also determine whether the second component model collides with another component (e.g., a receiver, faceplate, or other component). In such examples, the description of FIG. 4 may apply with respect to the shell or the other component.

Based on a determination that the second component model collides with the shell model when the second component model is at the current position ("YES" branch of 404), evaluation system 130 may adjust the current position of the second component model in a direction away from the ear canal model at a collision point (406). For example, evaluation system 130 may determine a normal vector of a surface of the ear canal model (or a normal vector of an inner surface of the shell model) at the collision point. In this example, evaluation system 130 may translate the second component model by a predetermined distance along the determined normal vector. In some examples, if there are two or more collision points on opposite surfaces of the second component model, evaluation system 130 may adjust the current position of the second component model so that the second component model rotates in a direction indicated by normal vectors of the collision points. The component optimization process may then revert to action 404.

Based on a determination that the second component model does not collide with the shell model when the second component model is at the current position ("NO" branch of 404), evaluation system 130 may determine whether a previous adjustment of the current position of the second component model resolved a collision of the second component model and the shell model (408). If the previous adjustment of the current position of the second component model resolved the collision of the second component model and the shell model ("YES" branch of 408), evaluation system 130 may determine whether the previous adjustment of the current position of the second component model was along a medial/lateral axis, e.g., only along the medial/lateral axis or primarily along the medial/lateral axis (410). If the previous adjustment to the current position of the second component model is along the medial/lateral axis ("YES" branch of 410), evaluation system 130 may output the current position of the second component model as the optimized position of the second component model (418). The process may end at this point because it may no longer be possible to translate the second component model further into the ear canal.

If the previous adjustment of the current position of the second component model is not along the medial/lateral axis ("NO" branch of 410) or if the previous adjustment to the current position of the second component model did not resolve the collision of the second component model and the shell model ("NO" branch of 408), evaluation system 130 may adjust the current position of the second component model in a medial direction (412). The medial direction is a direction toward an inner end of the ear canal. In some examples, evaluation system 130 may adjust the current position of the second component model in the medial direction by a predetermined distance, such as 0.5 millimeters (mm) or another distance. In this way, FIG. 4 optimizes the position of the component according to an optimization criterion of insertion of the second component model in the medial direction. Additionally, evaluation system 130 may determine whether the second component model collides with the shell model when the second component model is at the adjusted current position (414).

If a new collision exists ("YES" branch of 414), evaluation system 130 may adjust the current position of the second component model in a direction away from the ear canal model (or inner surface of the shell model) at a collision point (416). Evaluation system 130 may adjust the current position of the second component model in the same way as described above with respect to action 406. Evaluation system 130 may then revert to step 414. If the second component model does not collide with the shell model ("NO" branch of 414), evaluation system may revert to action 408. Process 400 may continue until action 418 is reached or one or more other stopping criteria are satisfied.

FIG. 5 is a conceptual diagram illustrating an example hearing instrument model 500 positioned within an ear impression model 502 in accordance with one or more techniques of this disclosure. The example of FIG. 5 further shows a component model 504 positioned within hearing instrument model 500. Evaluation system 130 may perform the component optimization process to determine the position of component model 504.

FIG. 6 is a conceptual diagram illustrating an example heat map model 600 in accordance with one or more techniques of this disclosure. Evaluation system 130 may output heat map model 600 for display. Heat map model 600 shows a component model 602. In the example of FIG. 6, component model 602 is represents a faceplate component.

Color on component model 602 may correspond to frequencies of collision of the component with shell models during component optimization processes on multiple ear impression models. For example, a point on component model 602 may have a first color if the point collides with a shell model 0.2 times per test of whether the point collides with the shell model (i.e., if 100 tests were performed and if the point collides with the shell 20 times, the point would have the first color); the point may have a second color if the point collides with the shell model 0.15 times per test of whether the point collides with the shell model, and so on. A user may use heat map model 600 to determine which areas of component model 602 are most likely to collide with shell models, and therefore which areas of component model 602 are most likely to prevent hearing instruments that include components represented by component model 602 from being smaller. In other examples, aspects other than color may be used, such as transparency, grayscale, textures, numerical values, and so on. Thus, evaluation system 130 may determine, based on the optimized positions of the component model within the ear impression models, one or more locations on the component model that are most likely to prevent the component model from being positioned in a way that further minimizes the sizes of the hearing instruments. Evaluation system 130 may output, for display on a display device (e.g., display screen 122), a heat map indicating the determined locations on the component model.

Heat map models may help users refine the components. For instance, by repeatedly running component optimization processes with differently sized component models, evaluation system 130 may be able to determine maximum or minimum dimensions of the components that enable hearing instruments to achieve specific sizes or dimensions. In some examples, after performing a component optimization process with respect to an ear impression model, evaluation system 130 may evaluate an amount of available space remaining within the shell model associated with the ear impression model. The available space is the space within the shell model not occupied by one or more of the component models. Evaluation system 130 may generate statistical data regarding the amount of available space. Evaluation system 130 may compare the statistics regarding amounts of available space when the component optimization process is performed with respect to multiple differently sized components. Larger (and potentially more capable) components may be desirable so long as such components do not generally increase lateralization of the hearing instruments. Thus, large amounts of available space within the shells may represent an opportunity to use more capable components. Accordingly, if the average available space associated with use of a component is sufficiently high, a user may use evaluation system 130 again with respect to a larger and/or differently shaped component.

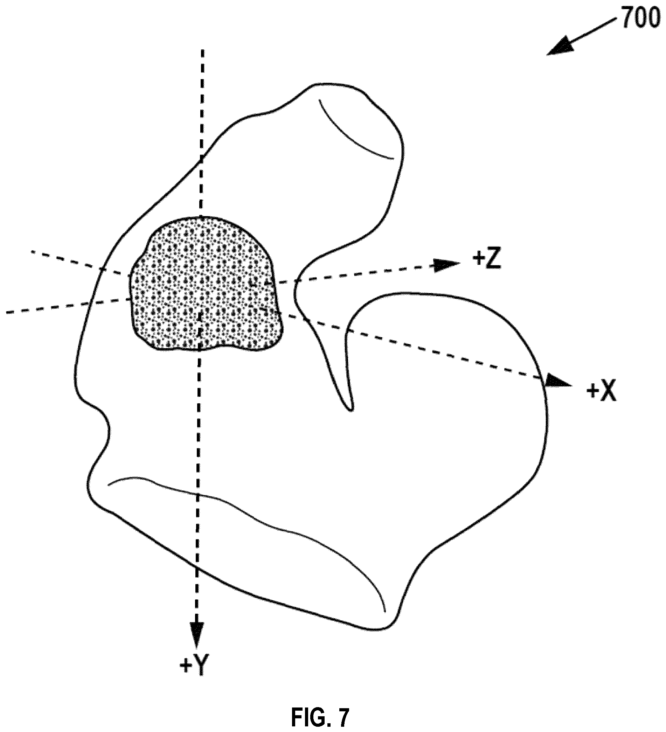

FIG. 7 is a conceptual diagram illustrating an example ear impression model 700 in accordance with one or more techniques of this disclosure. In the example of FIG. 7, ear impression model 700 includes a mesh of points that correspond to a surface of an ear canal of a patient. Evaluation system 130 may output ear impression model 700 for display.

FIG. 8 is a conceptual diagram illustrating an example table 800 generated by computing system 102 in accordance with one or more techniques of this disclosure. In the example of FIG. 8, table 800 includes rows corresponding to different ear impression models. Column 802A contains of identifiers of hearing instruments (devices) designed for ear canals represented by ear impression models. Column 802B contains identifiers of a second component in addition to a component whose position is being optimized. The second component may be included in hearing instruments in addition to the component whose position is being optimized. Column 802C indicates whether a component optimization process was able to successfully determine a position for a new component model. Column 802D indicates receiver identifiers for the hearing instruments. Column 802E indicates vent identifiers for the hearing instruments. Column 802F indicates widths of hearing instruments with an old version of the component. Column 802G indicates widths of hearing instruments with a new version of the component. Column 802H indicates differences between the widths of the hearing instruments with the old and new versions of the component. Column 802I indicates the lengths of hearing instruments with the old version of the component. Column 802J indicates lengths of hearing instruments with the old version of the component. Column 802K indicates differences between the lengths of the hearing instruments with the old and new versions of the component. Column 802L indicates heights of hearing instruments with the old version of the component. Column 802M indicates heights of hearing instruments with the new version of the component. Column 802N indicates differences between the heights of the hearing instruments with the old and new versions of the components. The last two rows of table 800 indicate mean values and standard deviation values for the dimension columns. In other examples, evaluation system 130 generates other statistical data.

Thus, in some examples, for each respective ear impression model of the plurality of ear impression models, evaluation system 130 may determine a dimensional value of a hearing instrument that includes the component model at the optimized position. Evaluation system 130 may determine at least one of a mean value or standard deviation of the dimensional values.

**In** some examples, evaluation system 130 use shell models stored in model database 132 to generate alternative shell models that have different vent configurations. The different vent configurations are listed in column 802E. In different vent configurations vents may have entry and exit points at different locations, and/or vent tubes may run along different courses along an inner surface of shells. Evaluation system 130 may use the alternate shell models in component optimization processes similar to previously existing shell models.

**In** some examples, evaluation system 130 may filter rows in table 800 based on user specified criteria. For example, evaluation system 130 may filter rows based on success, receiver type, vent type, design type, and so on.

**In** some examples, evaluation system 130 may determine average dimensions of hearing instruments for a given component model as discussed above. In such examples, evaluation system 130 may generate hearing instrument models that include shell models corresponding to the ear impression models and components models at the optimized positions. Evaluation system 130 may determine average distances from one or more anatomic landmarks to specific locations on the hearing instrument models. In other words, evaluation system 130 may determine landmark distances. Example landmarks may include a tip of the tragus, a tip of the antitragus, a center of the tympanic membrane, and so on. The specific locations on the hearing instrument models may include a medial tip of the shell model, a center of the faceplate, and so on. Furthermore, evaluation system 130 may determine a customer acceptance rating. To determine the customer acceptance rating, evaluation system 130 may access a database that includes data that relate customer acceptance measures to landmark distances of hearing instruments. For example, the database may include records, where each of the records indicates landmark distances of a hearing instrument and whether a user returned the hearing instrument. Evaluation system 130 may generate statistical data based on these records that relate landmark distances to rates of users returning hearing instruments. For example, evaluation system 130 may calculate a sum of the landmark distances for the each of the hearing instruments and calculate a correlation between the summed landmark distances and returns. In some examples, evaluation system 130 may calculate correlations between specific landmark distances (e.g., a distance from a faceplate to a canal aperture) and returns. Using such statistical data and landmark distances calculated from hearing instrument models when evaluating a component model, evaluation system 130 may predict rates of return of hearing instruments that include the component model.

The following is a non-limiting list of clauses in accordance with techniques of this disclosure.

Clause 1. A computer-implemented method comprising: obtaining, by one or more processors implemented in circuitry, a component model, the component model being a 3-dimensional (3D) model of a component of a hearing instrument; obtaining, by the one or more processors, a plurality of ear impression models, each respective ear impression model of the plurality of ear impression models being a 3D model of an ear canal of a user corresponding to the respective ear impression model; for each respective ear impression model of the plurality of ear impression models, performing, by the one or more processors, a component optimization process that optimizes a position of the component model within the respective ear impression model in 6-degrees of freedom based on one or more optimization criteria; generating, by the one or more processors, statistical data based on the positions of the components model within the ear impression models; and outputting, by the one or more processors, the statistical data.

Clause 2. The computer-implemented method of clause 1, wherein the one or more optimization criteria include distances of the component model from one or more anatomical landmarks of the ear canal of the user corresponding to the respective ear impression model.

Clause 3. The computer-implemented method of any of clauses 1-2, wherein: the component model is a second component model and is a 3D model of a second version of the component, the respective ear impression model is associated with a hearing instrument model that specifies a position of a first component model within the respective ear impression model, the first component model being a 3D model of a first version of the component, and performing the component optimization process comprises: setting a current position of the second component model based on the position of the first component model; (i) determining whether the second component model collides with a shell model when the second component model is at the current position; (ii) based on a determination that the second component model collides with the shell model when the second component model is at the current position, adjust the current position of the second component model in a direction away from an inner surface of the shell model at a collision point, and reverting to step (i); (iii) based on a determination that the second component model does not collide with the shell model when the second component model is at the current position: (iv) determining whether a previous adjustment of the current position of the second component model resolved a collision of the21econdd component model and the shell model; (v) based on the previous adjustment of the second component model resolving the collision of the second component model and the shell model, determining whether the previous adjustment of the second component model was along a medial/lateral axis; (vi) based on the previous adjustment of the second component model being along the medial/lateral axis, outputting the current position of the second component model as the optimized position of the second component model; (vii) based on the previous adjustment of the second component model not being along the medial/lateral axis or based on the previous adjustment of the second component model not resolving the collision of the second component model and the shell model, adjusting the current position of the second component model in a medial direction and determining whether a new collision exists when the second component model is at the current position; (viii) based on the new collision existing, translate and/or rotate the current position of the second component model in a direction away from the inner surface of the shell model at a collision point and reverting to step (vii); and (ix) based on no new collision existing, reverting to step (iv).

Clause 4. The computer-implemented method of any of clauses 1-3, further comprising outputting, by the one or more processors, for display by a display device, a graphical user interface that shows the component model at the optimized position relative to the respective ear model.

Clause 5. The computer-implemented method of clause 4, wherein the graphical user interface shows a shell model and the component model relative to the respective ear model.

Clause 6. The computer-implemented method of any of clauses 1-5, further comprising: determining, by the one or more processors, based on the optimized positions of the component model within the ear impression models, one or more locations on the component model that are most likely to prevent the component model from being positioned in a way that further minimizes sizes of the hearing instruments; and outputting, by the one or more processors, for display on a display device, a heat map indicating the determined locations on the component model.

Clause 7. The computer-implemented method of any of clauses 1-6, wherein the component is one of: a receiver, a microphone, a battery, a faceplate, an antenna, a sensor, a prewired faceplate, or processing circuitry.

Clause 8. The computer-implemented method of any of clauses 1-7, wherein generating the statistical data comprises: for each respective ear impression model of the plurality of ear impression models, determining, by the one or more processors, a dimensional value of a hearing instrument that includes the component model at the optimized position; and determining, by the one or more processors, at least one of a mean value or standard deviation of the dimensional values.

Clause 9. A computing system comprising: one or more storage devices configured to store: a component model, the component model being a 3-dimensional (3D) model of a component of a hearing instrument; and a plurality of ear impression models, each respective ear impression model of the plurality of ear impression models being a 3D model of an ear canal of a user corresponding to the respective ear impression model; and one or more processors communicatively coupled to the one or more storage devices, the one or more processors configured to: for each respective ear impression model of the plurality of ear impression models, perform a component optimization process that optimizes a position of the component model within the respective ear impression model in 6-degrees of freedom based on one or more optimization criteria; generate statistical data based on the positions of the components model within the ear impression models; and output the statistical data.

Clause 10. The computing system of clause 9, wherein the one or more optimization criteria include distances of the component model from one or more anatomical landmarks of the ear canal of the user corresponding to the respective ear impression model.

Clause 11. The computing system of any of clauses 9-10, wherein: the component model is a second component model and is a 3D model of a second version of the component, the respective ear impression model is associated with a hearing instrument model that specifies a position of a first component model within the respective ear impression model, the first component model being a 3D model of a first version of the component, and performing the component optimization process comprises: setting a current position of the second component model based on the position of the first component model; (i) determining whether the second component model collides with a shell model when the second component model is at the current position; (ii) based on a determination that the second component model collides with the shell model when the second component model is at the current position, adjust the current position of the second component model in a direction away from an inner surface of the shell model at a collision point, and reverting to step (i); (iii) based on a determination that the second component model does not collide with the shell model when the second component model is at the current position: (iv) determining whether a previous adjustment of the current position of the second component model resolved a collision of the second component model and the shell model; (v) based on the previous adjustment of the second component model resolving the collision of the second component model and the shell model, determining whether the previous adjustment of the second component model was along a medial/lateral axis; (vi) based on the previous adjustment of the second component model being along the medial/lateral axis, outputting the current position of the second component model as the optimized position of the second component model; (vii) based on the previous adjustment of the second component model not being along the medial/lateral axis or based on the previous adjustment of the second component model not resolving the collision of the second component model and the shell model, adjusting the current position of the second component model in a medial direction and determining whether a new collision exists when the second component model is at the current position; (viii) based on the new collision existing, translate and/or rotate the current position of the second component model in a direction away from the inner surface of the shell model at a collision point and reverting to step (vii); and (ix) based on no new collision existing, reverting to step (iv).

Clause 12. The computing system of any of clauses 9-11, wherein the one or more processors are further configured to output, for display by a display device, a graphical user interface that shows the component model at the optimized position relative to the respective ear model.

Clause 13. The computing system of clause 12, wherein the graphical user interface shows a shell model and the component model relative to the respective ear model.

Clause 14. The computing system of any of clauses 9-13, wherein the one or more processors are further configured to: determine, based on the optimized positions of the component model within the ear impression models, one or more locations on the component model that are most likely to prevent the component model from being positioned in a way that further minimizes sizes of the hearing instruments; and output, for display on a display device, a heat map indicating the determined locations on the component model.

Clause 15. The computing system of any of clauses 9-14, wherein the component is one of: a receiver, a microphone, a battery, a faceplate, an antenna, a sensor, a prewired faceplate, or processing circuitry.

Clause 16. The computing system of any of clauses 9-15, wherein the one or more processors are configured to, as part of generating the statistical data: for each respective ear impression model of the plurality of ear impression models, determine a dimensional value of a hearing instrument that includes the component model at the optimized position; and determine at least one of a mean value or standard deviation of the dimensional values.

Clause 17. One or more non-transitory computer-readable storage media comprising instructions stored thereon that, when executed, cause one or more processors of a computing system to: obtain a component model, the component model being a 3-dimensional (3D) model of a component of a hearing instrument; obtain a plurality of ear impression models, each respective ear impression model of the plurality of ear impression models being a 3D model of an ear canal of a user corresponding to the respective ear impression model; for each respective ear impression model of the plurality of ear impression models, perform a component optimization process that optimizes a position of the component model within the respective ear impression model in 6-degrees of freedom based on one or more optimization criteria; generate statistical data based on the positions of the components model within the ear impression models; and output the statistical data.

Clause 18. The one or more non-transitory computer-readable storage media of clause 17, wherein the instructions further cause the one or more processors to: determine, based on the optimized positions of the component model within the ear impression models, one or more locations on the component model that are most likely to prevent the component model from being positioned in a way that further minimizes sizes of the hearing instruments; and output, for display on a display device, a heat map indicating the determined locations on the component model.

Clause 19. One or more non-transitory computer-readable storage media comprising instructions stored thereon that, when executed by one or more processors, cause the one or more processors to perform the methods of any of clauses 1 - 8.

In this disclosure, ordinal terms such as "first," "second," "third," and so on, are not necessarily indicators of positions within an order, but rather may be used to distinguish different instances of the same thing. Examples provided in this disclosure may be used together, separately, or in various combinations. Furthermore, with respect to examples that involve personal data regarding a user, it may be required that such personal data only be used with the permission of the user.

It is to be recognized that depending on the example, certain acts or events of any of the techniques described herein can be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially.

In one or more examples, the functions described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processing circuits to retrieve instructions, code and/or data structures for implementation of the techniques described in this disclosure. A computer program product may include a computer-readable medium.

By way of example, and not limitation, such computer-readable storage media may include RAM, ROM, EEPROM, CD-ROM or other optical disk storage, magnetic disk storage, or other magnetic storage devices, flash memory, cache memory, or any other medium that can be used to store desired program code in the form of instructions or store data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), and Blu-ray disc, where disks usually reproduce data magnetically, while discs reproduce data optically with lasers. Combinations of the above should also be included within the scope of computer-readable media.

Functionality described in this disclosure may be performed by fixed function and/or programmable processing circuitry. For instance, instructions may be executed by fixed function and/or programmable processing circuitry. Such processing circuitry may include one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules. Also, the techniques could be fully implemented in one or more circuits or logic elements. Processing circuits may be coupled to other components in various ways. For example, a processing circuit may be coupled to other components via an internal device interconnect, a wired or wireless network connection, or another communication medium.

The techniques of this disclosure may be implemented in a wide variety of devices or apparatuses, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

## Claims

1. A computer-implemented method comprising:
obtaining, by one or more processors implemented in circuitry, a component model, the component model being a 3-dimensional (3D) model of a component of a hearing instrument;
obtaining, by the one or more processors, a plurality of ear impression models, each respective ear impression model of the plurality of ear impression models being a 3D model of an ear canal of a user corresponding to the respective ear impression model;
for each respective ear impression model of the plurality of ear impression models, performing, by the one or more processors, a component optimization process that optimizes a position of the component model within the respective ear impression model in 6-degrees of freedom based on one or more optimization criteria;
generating, by the one or more processors, statistical data based on the positions of the components model within the ear impression models; and
outputting, by the one or more processors, the statistical data.

2. The computer-implemented method of claim 1, wherein the one or more optimization criteria include distances of the component model from one or more anatomical landmarks of the ear canal of the user corresponding to the respective ear impression model.

3. The computer-implemented method of claim 1 or claim 2, wherein:
the component model is a second component model and is a 3D model of a second version of the component,
the respective ear impression model is associated with a hearing instrument model that specifies a position of a first component model within the respective ear impression model, the first component model being a 3D model of a first version of the component, and
performing the component optimization process comprises:
setting a current position of the second component model based on the position of the first component model;
(i) determining whether the second component model collides with a shell model when the second component model is at the current position;
(ii) based on a determination that the second component model collides with the shell model when the second component model is at the current position, adjust the current position of the second component model in a direction away from an inner surface of the shell model at a collision point, and reverting to step (i);
(iii) based on a determination that the second component model does not collide with the shell model when the second component model is at the current position:
(iv) determining whether a previous adjustment of the current position of the second component model resolved a collision of the second component model and the shell model;
(v) based on the previous adjustment of the second component model resolving the collision of the second component model and the shell model, determining whether the previous adjustment of the second component model was along a medial/lateral axis;
(vi) based on the previous adjustment of the second component model being along the medial/lateral axis, outputting the current position of the second component model as the optimized position of the second component model;
(vii) based on the previous adjustment of the second component model not being along the medial/lateral axis or based on the previous adjustment of the second component model not resolving the collision of the second component model and the shell model, adjusting the current position of the second component model in a medial direction and determining whether a new collision exists when the second component model is at the current position;
(viii) based on the new collision existing, translate and/or rotate the current position of the second component model in a direction away from the inner surface of the shell model at a collision point and reverting to step (vii); and
(ix) based on no new collision existing, reverting to step (iv).

4. The computer-implemented method of any of claims 1 to 3, further comprising outputting, by the one or more processors, for display by a display device, a graphical user interface that shows the component model at the optimized position relative to the respective ear model, and optionally, wherein the graphical user interface shows a shell model and the component model relative to the respective ear model.

5. The computer-implemented method of any of claims 1 to 4, further comprising:
determining, by the one or more processors, based on the optimized positions of the component model within the ear impression models, one or more locations on the component model that are most likely to prevent the component model from being positioned in a way that further minimizes sizes of the hearing instruments; and
outputting, by the one or more processors, for display on a display device, a heat map indicating the determined locations on the component model, and/or, wherein the component is one of: a receiver, a microphone, a battery, a faceplate, an antenna, a sensor, a prewired faceplate, or processing circuitry.

6. The computer-implemented method of any of claims 1 to 5, wherein generating the statistical data comprises:
for each respective ear impression model of the plurality of ear impression models, determining, by the one or more processors, a dimensional value of a hearing instrument that includes the component model at the optimized position; and
determining, by the one or more processors, at least one of a mean value or standard deviation of the dimensional values.

7. A computing system comprising:
one or more storage devices configured to store:
a component model, the component model being a 3-dimensional (3D) model of a component of a hearing instrument; and
a plurality of ear impression models, each respective ear impression model of the plurality of ear impression models being a 3D model of an ear canal of a user corresponding to the respective ear impression model; and
one or more processors communicatively coupled to the one or more storage devices, the one or more processors configured to:
for each respective ear impression model of the plurality of ear impression models, perform a component optimization process that optimizes a position of the component model within the respective ear impression model in 6-degrees of freedom based on one or more optimization criteria;
generate statistical data based on the positions of the components model within the ear impression models; and
output the statistical data.

8. The computing system of claim 7, wherein the one or more optimization criteria include distances of the component model from one or more anatomical landmarks of the ear canal of the user corresponding to the respective ear impression model.

9. The computing system of claim 7 or claim 8, wherein:
the component model is a second component model and is a 3D model of a second version of the component,
the respective ear impression model is associated with a hearing instrument model that specifies a position of a first component model within the respective ear impression model, the first component model being a 3D model of a first version of the component, and
performing the component optimization process comprises:
setting a current position of the second component model based on the position of the first component model;
(i) determining whether the second component model collides with a shell model when the second component model is at the current position;
(ii) based on a determination that the second component model collides with the shell model when the second component model is at the current position, adjust the current position of the second component model in a direction away from an inner surface of the shell model at a collision point, and reverting to step (i);
(iii) based on a determination that the second component model does not collide with the shell model when the second component model is at the current position:
(iv) determining whether a previous adjustment of the current position of the second component model resolved a collision of the second component model and the shell model;
(v) based on the previous adjustment of the second component model resolving the collision of the second component model and the shell model, determining whether the previous adjustment of the second component model was along a medial/lateral axis;
(vi) based on the previous adjustment of the second component model being along the medial/lateral axis, outputting the current position of the second component model as the optimized position of the second component model;
(vii) based on the previous adjustment of the second component model not being along the medial/lateral axis or based on the previous adjustment of the second component model not resolving the collision of the second component model and the shell model, adjusting the current position of the second component model in a medial direction and determining whether a new collision exists when the second component model is at the current position;
(viii) based on the new collision existing, translate and/or rotate the current position of the second component model in a direction away from the inner surface of the shell model at a collision point and reverting to step (vii); and
(ix) based on no new collision existing, reverting to step (iv).

10. The computing system of any of claims 7 to 9, wherein the one or more processors are further configured to output, for display by a display device, a graphical user interface that shows the component model at the optimized position relative to the respective ear model, and optionally, wherein the graphical user interface shows a shell model and the component model relative to the respective ear model.

11. The computing system of any of claims 7 to 10, wherein the one or more processors are further configured to:
determine, based on the optimized positions of the component model within the ear impression models, one or more locations on the component model that are most likely to prevent the component model from being positioned in a way that further minimizes sizes of the hearing instruments; and
output, for display on a display device, a heat map indicating the determined locations on the component model.

12. The computing system of any of claims 7 to 11, wherein the component is one of: a receiver, a microphone, a battery, a faceplate, an antenna, a sensor, a prewired faceplate, or processing circuitry.

13. The computing system of any of claims 7 to 12, wherein the one or more processors are configured to, as part of generating the statistical data:
for each respective ear impression model of the plurality of ear impression models, determine a dimensional value of a hearing instrument that includes the component model at the optimized position; and
determine at least one of a mean value or standard deviation of the dimensional values.

14. One or more non-transitory computer-readable storage media comprising instructions stored thereon that, when executed, cause one or more processors of a computing system to:
obtain a component model, the component model being a 3-dimensional (3D) model of a component of a hearing instrument;
obtain a plurality of ear impression models, each respective ear impression model of the plurality of ear impression models being a 3D model of an ear canal of a user corresponding to the respective ear impression model;
for each respective ear impression model of the plurality of ear impression models, perform a component optimization process that optimizes a position of the component model within the respective ear impression model in 6-degrees of freedom based on one or more optimization criteria;
generate statistical data based on the positions of the components model within the ear impression models; and
output the statistical data.

15. The one or more non-transitory computer-readable storage media of claim 14, wherein the instructions further cause the one or more processors to:
determine, based on the optimized positions of the component model within the ear impression models, one or more locations on the component model that are most likely to prevent the component model from being positioned in a way that further minimizes sizes of the hearing instruments; and
output, for display on a display device, a heat map indicating the determined locations on the component model.
